# EUROPEAN PATENT SPECIFICATION

(11) **EP 1 359 057 B1**
(45) Date of publication and mention of the grant of the patent: **20.02.2008**
(21) Application number: 03101120.8
(22) Date of filing: 24.04.2003
(51) Int. Cl.: B60R 16/02, H04L 12/56, H04L 12/40, H04L 29/14

(54) **Vehicle data transmission system with link redundancy**
Datenübertragungssystem im Fahrzeug mit redundanten Verbindungen
Système de transmission pour véhicule avec liaisons redondantes

(30) Priority: 24.04.2002 IT BO20020238
(43) Date of publication of application: 05.11.2003
(73) Proprietor: CNH Italia S.p.A., 41100 Modena (IT)
(72) Inventor: Ferracin, Paolo, 41017, Ravarino (Modena) (IT); Mongiardo, Marcello, 41100, Modena (IT)
(74) Representative: Vandenbroucke, Alberic

(56) References cited:
- US-A- 4 627 045
- US-A- 5 329 521
- US-A- 5 784 547

## Description

The present invention relates to a vehicle data transmission system.

More specifically, the present invention relates to a CAN (Controller Area Network) data transmission system for controlling data communication over at least one CAN protocol data bus hereinafter referred to as a CAN bus.

At present, known CAN data transmission systems are defined by a "multiplex" network connection for connecting and permitting data and information exchange between the various electronic central control units located at various points of the vehicle over a single serial CAN bus.

Though widely used, CAN data transmission systems proposed so far are subject to frequent electrical or mechanical damage of the CAN bus, thus preventing communication between some or all of the electronic central control units connected to it, and so resulting in malfunctioning of the data transmission system as a whole.

To eliminate the above drawbacks, it has been proposed to connect the electronic central control units to a second CAN bus to effect redundant data transmission, in which the various electronic central control units communicate in parallel and simultaneously over both CAN buses.

In US-A-5.784.547 it is also proposed to have two bus lines. Under normal operating conditions however of the system, both lines are in use, be it not for the same purpose. One bus is operational to transmit process data, whereas the other bus transmits status information. When a fault is detected on the line transmitting the process data, a switch-over is effected to the line normally transmitting only the status information. The above arrangement requires two CAN controllers and two CPU's for each node. The presence of two CPU's is required as each CPU needs to fulfil the function of a watchdog processor for the other CPU.

US-A-5.329.521, from which the present invention departs, again shows two lines (Ethernet A and B) which under normal conditions are both in use. In one of the embodiments of US-A-5.329.521, redundancy is reduced in some components by providing a single CPU and a single node controller. This is enabled by providing a switch which is set in a position to receive data from a line on which no fault is detected. However, data sent out by the central control unit is not controlled by the switch, and thus this data continues to be sent to both Ethernet lines, although one of the two lines might be defective. This might lead to confusion inbetween the central control units which line to use for uncorrupted data transmission and reception.

It is therefore an object of the present invention to provide a vehicle data transmission system designed to eliminate the aforementioned drawbacks.

According to the present invention, there is provided a vehicle data transmission system, as defined in Claim 1.

A preferred, non-limiting embodiment of the present invention will now be described, by way of example, with reference to the accompanying drawings, in which:
Figure 1 shows a block diagram of a vehicle data transmission system in accordance with the present invention; and
Figure 2 shows an electric diagram of a number of electronic components of an electronic central control unit forming part of the vehicle data transmission system of Figure 1.

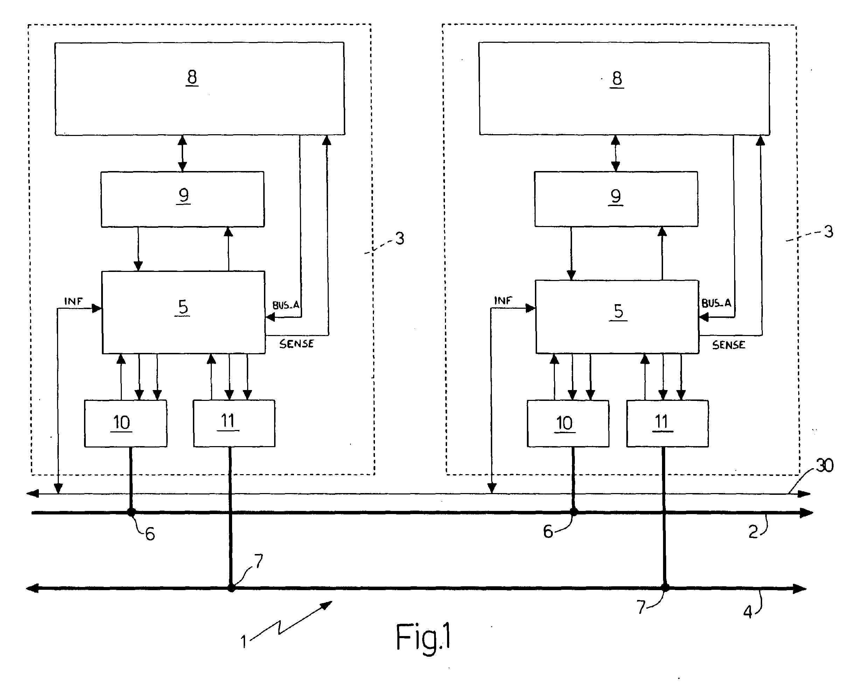

Number 1 in Figure 1 indicates as a whole a CAN (Controller Area Network) vehicle data transmission system comprising a first data line 2 and a number of electronic central control units 3 (two shown in Figure 1). The central control units 3 are located at various points of the vehicle (not shown) to perform respective vehicle control and/or command functions, and are each connected to the first data line 2 to exchange data between one another.

Data transmission system 1 further comprises a second data line 4 and a number of electronic switching devices 5, each for selectively connecting a corresponding electronic central control unit 3 to the second data line 4, when a malfunction of the first data line 2 is detected.

More specifically, each switching device 5 is operable to disable connection between a respective electronic central control unit 3 and the first data line 2, and to enable connection between said electronic central control unit 3 and the second data line 4, when a malfunction on first data line 2 is detected. This action permits data exchange between the electronic central control units 3 over second data line 4. In the example shown, second data line 4 defines a redundant line for information exchange between electronic central control units 3, and is enabled by data transmission system 1 when a malfunction on first data line 2 prevents data exchange between the electronic central control units 3.

In the Figure 1 example, first and second data lines 2 and 4 are defined respectively by a first and second, e.g. CAN, connecting bus hereinafter referred to as CAN buses, which extend along an open-loop path, and have respective nodes - hereinafter indicated 6 and 7 - to which electronic central control units 3 are connected.

With reference to Figure 1, each electronic central control unit 3 comprises a switching device 5 and an internal control unit 8, e.g. a microprocessor, which, in addition to a number of predetermined control functions of various on-vehicle devices (not shown), also provides for detecting malfunctioning of first CAN bus 2. A first and second interface circuit (CAN LINE DRIVER) 10 and 11 are connected respectively on one side to the first and second CAN bus 2 and 4, and on the other side to the switching device 5. A CAN controller 9 is interposed between switching device 5 and internal control unit 8, and is operable to control data communication between internal control unit 8 and the CAN bus enabled by data transmission system 1.

In the example shown, CAN controller 9 controls data reception and transmission over the active CAN protocol bus, and enables the detection of error conditions if they should occur on the CAN bus during communication.

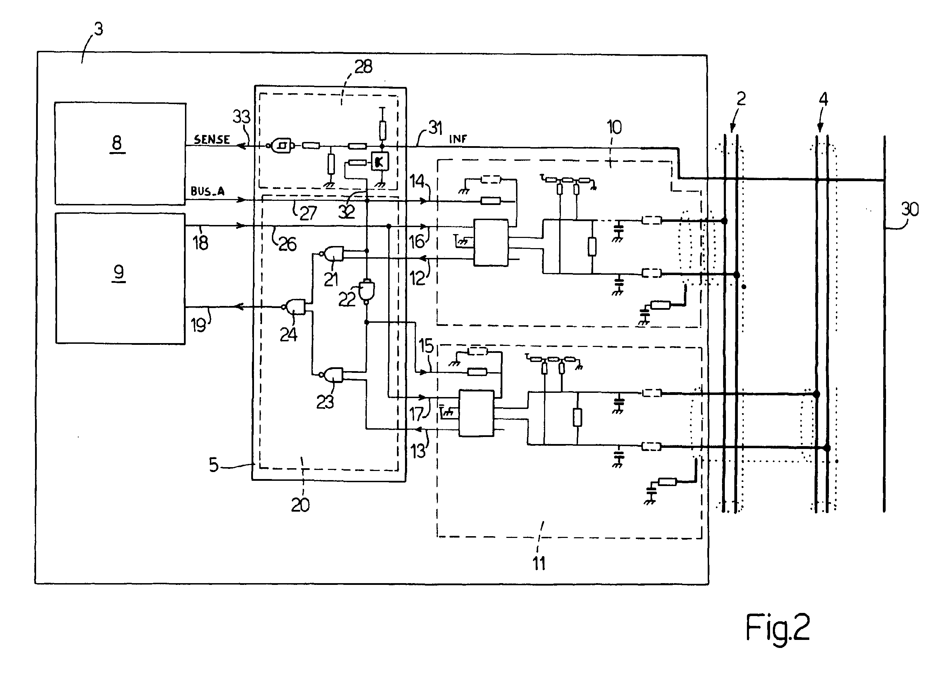

With reference to Figures 1 and 2, switching device 5 may be defined by an electronic switching circuit integrated in electronic central control unit 3. The switching circuit 5, as a function of a control signal BUS A from internal control unit 8, disables the connection between CAN controller 9 and a first interface circuit 10 (i.e. first CAN bus 2), and at the same time enables connection between CAN controller 9 and a second interface circuit 11 (i.e. second CAN bus 4). In other words, by driving switching device 5, internal control unit 8 disables data reception and transmission over first CAN bus 2 by CAN controller 9, and enables data reception and transmission over second CAN bus 4.

Figure 2 shows one possible embodiment of electronic switching circuit 5, which in the example shown is defined by a number of logic gates connected to compose a predetermined (solid-state) logic switching circuit. As a function of the logic value of control signal BUS A from internal control unit 8, the circuit selectively disables communication over first CAN bus 2, and, at the same time, connects CAN controller 9 and second CAN bus 4 to enable communication over second CAN bus 4.

With reference to Figure 2, the first and second interface circuit 10, 11 each have an output terminal 12, 13 supplying the data received from first and second CAN bus 2, 4 respectively; and a first input terminal 16, 17 for receiving and transmitting the data generated by CAN controller 9 to the first and second CAN bus 2, 4 respectively. The first and second interface circuit 10, 11 furthermore each have a respective second input terminal 14, 15 for receiving a signal, on the basis of which they enable/disable connection to first and second CAN bus 2, 4 respectively.

CAN controller 9 has an output terminal 18 supplying the data for transmission and an input terminal 19 receiving the output data from first or second interface circuit 10 or 11. In connection with the above, it should be pointed out that CAN controller 9, internal control unit 8, and interface circuits 10, 11 are conventional in the art and are therefore not described in detail.

With reference to the Figure 2 example, switching circuit 5 comprises a first circuit 20 in turn comprising a first logic gate 21 performing a NAND logic function and having a first input receiving the control signal BUS_A from internal control unit 8, and a second input connected to output terminal 12 of first interface circuit 10. Circuit 5 further comprises a second logic gate 22 acting as an inverter, and having two inputs connected to each other and to the first input of first logic gate 21, and an output connected to second input 15 of second interface circuit 11. A third logic gate 23 performs a NAND logic function, and has a first input connected to the output of second logic gate 22, and a second input connected to output terminal 13 of second interface circuit 11.

First circuit 20 also comprises a fourth logic gate 24 performing a NAND logic function, and having a first input connected to the output of first logic gate 21, a second input connected to the output of third logic gate 23, and an output connected to input terminal 19 of CAN controller 9.

In connection with the above, it should be pointed out that first circuit 20 also comprises a first internal line 26 for connecting output terminal 18 of CAN controller 9 to first input terminal 16, 17 of first and second interface circuit 10, 11. A second internal line 27 is connected to and for supplying second input terminal 14 of first interface circuit 10 with control signal BUS_A from internal control unit 8.

With reference to Figures 1 and 2, switching circuit 5 preferably, though not necessarily, also comprises a second circuit 28 for picking up - over a transmitting-receiving line 30, preferably, though not necessarily, forming part of transmission system 1 - an information signal INF indicating that all the electronic central control units 3 have been "switched" to second CAN bus 4.

More specifically, second circuit 28 has a first terminal 31 connected to transmitting-receiving line 30 and having information signal INF, which has a first, e.g. low, logic level when communication of electronic central control units 3 over first CAN bus 2 is enabled, and has a second, e.g. high, logic level when the electronic central control units 3 have all been "switched" from first CAN bus 2 to second CAN bus 4, i.e. when communication over second CAN bus 4 has been enabled.

Second circuit 28 further comprises a second terminal 32 receiving control signal BUS_A from internal control unit 8 and a third terminal 33 connected to internal control unit 8 for supplying a SENSE signal indicating that the other electronic central control units 3 of transmission system 1 have been "switched", i.e. that the second CAN bus has been enabled.

In connection with the above, it should be pointed out that electronic circuit 5, and particularly first circuit 20, may be defined by connections and a combination of logic gates other than those described above, while still providing for the same switching function as switching device 5.

Data transmission system 1 operates as follows. Initially, by implementing a predetermined series of data communication control operations (network communication control software), and by means of control signal BUS_A having, for example, a high logic level, each internal control unit 8 drives switching device 5 to connect CAN controller 9 and first CAN bus 2. At this stage, second CAN bus 4 is disabled by being disconnected from CAN controller 9, so that the electronic central control units 3 communicate exclusively over first CAN bus 2.

More specifically, control signal BUS_A generated by internal control unit 8, and having a high logic value, enables first interface circuit 10 and disables second interface circuit 11. In the example shown, via the logic of electronic circuit 5, control signal BUS_A connects output terminal 18 of CAN controller 9 to first input terminal 16 of first interface circuit 10, so the signals generated by CAN controller 9 can be transmitted over first CAN bus 2. Input terminal 19 of CAN controller 9 on the other hand is connected to output terminal 12 of first interface circuit 10, so the signals to CAN controller 9 can be transmitted from the first CAN bus 2.

It should be pointed out that, by virtue of second logic gate 22, the signal at second input terminal 15 of second interface circuit 11 has a low logic value, which disables second interface circuit 11 and therefore communication between CAN controller 9 and second CAN bus 4.

In the event one or more of the electronic central control units 3 encounter communication problems over first CAN bus 2, the internal control unit 8 in each electronic central control unit 3 commands the respective switching device 5 - by means of control signal BUS_A (whose logic value switches, for example, from high to low) - to disable connection between respective CAN controller 9 and first CAN bus 2. At the same time connection between CAN controller 9 and second CAN bus 4 is enabled, thus "shifting" communication between the electronic central control units 3 over to second CAN bus 4, which thus takes over as the active CAN bus of data transmission system 1.

More specifically, at this stage, the control signal BUS_A generated by internal control unit 8 switches to a low logic value, so as to enable second interface circuit 11 and disable first interface circuit 10.

As such, second interface circuit 11 is enabled by receiving a high-logic-value signal at second input terminal 15, and first interface circuit 10 is disabled by receiving a low-logic-value signal at second input terminal 14.

More specifically, the enabling of second interface circuit 11 enables connection between second CAN bus 4 and first input terminal 17 and output terminal 13 of second interface circuit 11 whereas the disabling of first interface circuit 10 disables connection between first CAN bus 2 and first input terminal 16 and output terminal 12.

As such, the logic of switching device 5 connects output terminal 18 and input terminal 19 of CAN controller 9 to first input terminal 17 and output terminal 13 respectively of second interface circuit 11, so that CAN controller 9 of electronic central control unit 3 communicates over the second CAN bus 4.

In connection with the above, it should be pointed out that, upon detecting, for example, a change in the logic level of information signal INF, the communication switch from first CAN bus 2 to second CAN bus 4 is made by all the electronic central control units 3. In the example shown, the switch by electronic control units 3 from first CAN bus 2 to second CAN bus 4 is ensured by second electric circuit 28, which, by means of information signal INF, provides for coordinating start-up of transmission and reception by each electronic central control unit 3 over the second CAN bus 4.

Unlike known data transmission systems, data transmission system 1 described above has the big advantage of employing only one CAN controller 9 for each electronic central control unit 3, thus reducing the manufacturing cost of data transmission system 1.

Moreover, using a solid-state electronic switching device 5 with a logic switching circuit inside each electronic central control unit 3 makes the data transmission system highly reliable, and ensures full data transmission redundancy in both serial CAN buses 2 and 4.

## Claims

1. A vehicle data transmission system (1) comprising :
- a first data bus (2) for transmitting data when no malfunction on said data bus (2) is detected;
- at least a second data bus (4) which is redundant and not enabled when no malfunction on said first data bus (2) is detected;
- a number of electronic central control units (3) connected to said first and said second data bus (2, 4) to communicate with one another; each electronic central control unit (3) comprising :
- a first and second interface circuit (10, 11) respectively connected to said first and second data bus (2, 4) on one side and each interface circuit having an output terminal (12, 13) and an input terminal (16, 17) on the other side;
- one internal control unit (8) operable to control functions of various on-vehicle devices and to detect malfunctioning of said first data bus (2);
- a single Controller Area Network, CAN, controller (9) operable to control data communication between said one internal control unit (8) and the data bus of the first and second databus, which is enabled by vehicule data transmission system (1);
- an electronic switching circuit (5) interposed between said first and second interface circuits (10, 11) and said CAN controller (9) for selectively connecting said electronic central control units (3) from said first data bus (2) to said second data bus (4), upon a malfunctioning of said first data bus (2) being detected, so as to enable data communication over said second data bus (4) and disable said communication over said first data bus (2); both output and input terminals (12, 13; 16, 17) of said first and second interface circuits (10, 11) being connected with said CAN controller (9) through said electronic switching circuit (5); said internal control unit (8) sending a signal (BUS_A) to said electronic switching circuit (5) and said first and second interface circuits (10, 11) upon the detection of a malfunction on said first data bus (2) thereby disabling the output and input terminals (12, 16) of said first interface circuit (10) and enabling the output and input terminals (13, 17) of said second interface circuit (11).

2. A vehicle data transmission system according to claim 1, **characterized in that** each electronic switching circuit (5) comprises a number of logic gates (21, 22, 23, 24) connected to one another to define a predetermined logic switching circuit for controlling connection of the respective said electronic central control unit (3) to said second data bus (4), upon detection of a malfunction in communication over said first data bus (2).

3. A vehicle data transmission system according to claim 1 or 2, **characterized in that** said first and said second data bus (2, 4) are CAN-type data buses.

4. A vehicle data transmission system according to claim 2, **characterized in that** said logic gates (21, 22, 23, 24) of said electronic switching circuit (5) are connected such as to selectively connect said controller (9), as a function of said control signal (BUS_A), to said second interface circuit (11), upon detection of a malfunction in communication over said first data bus (2).

## Patentansprüche

1. Fahrzeug-Datenübertragungssystem (1) mit:
- einem ersten Datenbus (2) zur Übertragung von Daten, wenn keine Fehlfunktion auf dem Datenbus (2) festgestellt wird;
- zumindest einem zweiten Datenbus (4), der redundant ist, und der nicht eingeschaltet ist, wenn keine Fehlfunktion des ersten Datenbus (2) festgestellt wird;
- einer Anzahl von elektronischen Zentralsteuereinheiten (3), die mit dem ersten und dem zweiten Datenbus (2, 4) verbunden sind und miteinander kommunizieren; wobei jede elektronische Steuereinheit (3) Folgendes umfasst:
- eine erste und eine zweite Schnittstellenschaltung (10, 11), die jeweils mit dem ersten und dem zweiten Datenbus (2, 4) auf einer Seite verbunden sind, wobei jede Schnittstellenschaltung einen Ausgangsanschluss (12, 13) und einen Eingangsanschluss (16, 17) auf der anderen Seite aufweist;
- eine interne Steuerschaltung (8), die zur Steuerung von Funktionen verschiedener Geräte auf dem Fahrzeug und zur Feststellung einer Fehlfunktion des ersten Datenbusses (2) betreibbar ist;
- eine einzelne Steuerungs-Feldbus-Netzwerk-, CAN-, Steuerung (9), die zur Steuerung der Datenkommunikation zwischen der einzelnen internen Steuereinheit (8) und demjenigen Datenbus der ersten und zweiten Datenbusse betreibbar ist, der durch das Fahrzeug-Datenübertragungssystem (1) eingeschaltet ist;
- einen elektronischen Schalterkreis (5), der zwischen den ersten und zweiten Schnittstellenschaltungen (10, 11) und der CAN-Steuerung (9) zum selektiven Verbinden der elektronischen Zentralsteuereinheiten (3) von dem ersten Datenbus (2) auf dem zweiten Datenbus (4) bei der Feststellung einer Fehlfunktion des ersten Datenbus (2) eingefügt ist, um die Datenkommunikation über den zweiten Datenbus (4) einzuschalten und die Kommunikation über den ersten Datenbus (2) abzuschalten; wobei sowohl die Ausgangs- als auch die Eingangsanschlüsse (12, 13; 16, 17) der ersten und zweiten Schnittstellenschaltung (10, 11) mit der CAN-Steuerung (9) über den elektronischen Schalterkreis (5) verbunden sind, wobei die interne Steuerschaltung (8) ein Signal (BUS_A) an den elektronischen Steuerkreis (5) und die ersten und zweiten Schnittstellenschaltungen (10, 11) bei der Feststellung einer Fehlfunktion auf dem ersten Datenbus (2) sendet, wodurch die Ausgangs- und Eingangsanschlüsse (12, 16) der ersten Schnittstellenschaltung (10) abgeschaltet und die Ausgangs- und Eingangsanschlüsse (13, 17) der zweiten Schnittstellenschaltung (11) eingeschaltet werden.

2. Fahrzeug-Datenübertragungssystem nach Anspruch 1, **dadurch gekennzeichnet, dass** jeder elektronische Schalterkreis (5) eine Anzahl von Logik-Gattern (21, 22, 23, 24) umfasst, die miteinander verbunden sind, um einen vorgegebenen Logik-Schalterkreis zur Steuerung der Verbindung der jeweiligen elektronischen Zentralsteuereinheit (3) mit dem zweiten Datenbus (4) bei der Feststellung einer Fehlfunktion bei der Kommunikation über den ersten Datenbus (2) zu bilden.

3. Fahrzeug-Datenübertragungssystem nach Anspruch 1 oder 2, **dadurch gekennzeichnet, dass** der erste und der zweiten Datenbus (2, 4) Datenbusse vom CAN-Typ sind.

4. Fahrzeug-Datenübertragungssystem nach Anspruch 2, **dadurch gekennzeichnet, dass** die Logik-Gatter (21, 22, 23, 24) des elektronischen Schalterkreises (5) derart verbunden sind, dass sie selektiv die Steuerung (9) in Abhängigkeit von dem Steuersignal (BUS_A) bei Feststellung einer Fehlfunktion in der Kommunikation über den ersten Datenbus (2) mit der zweiten Schnittstellenschaltung (11) verbinden.

## Revendications

1. Système de transmission de données de véhicule (1) comprenant :
- un premier bus de données (2) pour la transmission de données lorsqu'aucun dysfonctionnement n'est détecté sur ledit bus de données ;
- au moins un deuxième bus de données (4) qui est redondant et n'est pas validé lorsqu'aucun dysfonctionnement n'est détecté sur ledit premier bus de données (2) ;
- plusieurs unités de contrôle central électroniques (3) reliées auxdits premier et deuxième bus de données (2, 4) pour communiquer l'un avec l'autre ; chaque unité de contrôle central électronique (3) comprenant :
- un premier et un deuxième circuits d'interface (10, 11), connectés respectivement au premier et au deuxième bus de données (2, 4) d'un côté, chaque circuit d'interface possédant une borne de sortie (12, 13) et une borne d'entrée (16, 17) de l'autre côté ;
- une unité de contrôle interne (8) qui peut être exploitée pour contrôler des fonctions de divers dispositifs embarqués et pour détecter le dysfonctionnement dudit premier bus de données (2) ;
- un réseau local de contrôleur simple, CAN, contrôleur (9) qui peut être exploité pour contrôler la communication de données entre ladite unité de contrôle interne (8) et le bus de données du premier et du deuxième bus de données, qui est validé par le système de transmission de données de véhicule (1);
- un circuit de commutation électronique (5), inséré entre un premier et un deuxième circuits d'interface (10, 11) et ledit contrôleur CAN (9), pour connecter sélectivement lesdites unités de contrôle central électroniques (3) dudit premier bus de données (2) vers ledit deuxième bus de données (4) en cas de dysfonctionnement détecté dudit premier bus de données (2), de manière à valider la communication de données via ledit deuxième bus de données (4) et à invalider ladite communication par le biais dudit premier bus de données (2); les deux bornes d'entrée et de sortie (12, 13 ; 16, 17) desdits premier et deuxième circuits d'interface (10, 11) étant reliées avec ledit contrôleur CAN (9) par l'intermédiaire dudit circuit de commutation électronique (5) ; ladite unité de contrôle interne (8) émettant un signal (BUS_A) en direction dudit circuit de commutation électronique (5) et lesdits premier et deuxième circuits d'interface (10, 11), en cas de détection d'un dysfonctionnement sur ledit premier bus de données (2), invalidant ainsi les bornes d'entrée et de sortie (12, 16) dudit circuit d'interface (10) et validant les bornes de sortie et d'entrée (13, 17) dudit deuxième circuit d'interface (11).

2. Système de transmission de données de véhicule selon la revendication 1, **caractérisé en ce que** chaque circuit de commutation électronique (5) comprend plusieurs portes logiques (21, 22, 23, 24) connectées l'une à l'autre pour définir un circuit de commutation logique prédéfini pour le contrôle de la connexion de l'unité de contrôle central électronique (3), respectivement, audit deuxième bus de données (4) en cas de détection d'un dysfonctionnement de la communication par le biais dudit premier bus de données (2).

3. Système de transmission de données de véhicule selon la revendication 1 ou 2, **caractérisé en ce que** ledit premier et ledit deuxième bus de données (2, 4) sont des bus de données de type CAN.

4. Système de transmission de données de véhicule selon la revendication 2, **caractérisé en ce que** lesdites portes logiques (21,22,23, 24) dudit circuit de commutation électronique (5) sont connectées de manière à connecter sélectivement ledit contrôleur (9) en tant que fonction dudit signal de contrôle (BUS_A) audit deuxième circuit d'interface (11) en cas de détection d'un dysfonctionnement de la communication par ledit premier bus de données (2).
